# EUROPÄISCHE PATENTANMELDUNG

(11) **EP 4 586 392 A1**
(43) Veröffentlichungstag der Anmeldung: **16.07.2025**
(21) Anmeldenummer: 24220575.5
(22) Anmeldetag: 17.12.2024
(51) Int. Cl.: H01M 50/543, H01R 4/30, H01R 4/70, H01R 11/26

(54) **HOCHSPANNUNGS- UND HOCHSTROMVERBINDUNGSVORRICHTUNG**

(30) Priorität: 09.01.2024 DE 202024100076 U
(71) Anmelder: Amphenol (Changzhou) Electronics Co., Ltd., Changzhou Jiangsu 213125 (CN)
(72) Erfinder: SHENPING, Li, 510663 Guangzhou (CN); HENG, Li, 213125 Changzhou (CN); BEI, Wang, 213125 Changzhou (CN)
(74) Vertreter: Staeger & Sperling Partnerschaftsgesellschaft mbB

(57) **Zusammenfassung**

Die Erfindung betrifft eine drehbare Hochspannungs- und Hochstrom-Verbindungsvorrichtung, die einen Stecker und eine Buchse umfasst, wobei die Buchse aus einer Anschlusseinheit, einer Muttereinheit, einem Isoliersockel, einer Isolierabdeckung und einer Berührschutzabdeckung besteht und der Stecker aus einer Anschlusseinheit, einer schraubenartigen Bolzeneinheit, einem Isoliersockel und einer Isolierabdeckung, dadurch gekennzeichnet, dass die Muttereinheit in eine konkave Struktur des Isoliersockels und die Anschlusseinheit in den Isoliersockel eingesetzt sind und eine Kupferhülse auf die Anschlusseinheit und die Muttereinheit aufgesetzt ist, und die Isolierdabdeckung mit dem Isoliersockel zusammengebaut ist, wobei der Isolierdeckel eine Seitenplatte aufweist und eine Schnittstelle besitzt, wobei die Seitenplatte mit einer Positionierplatte des Isoliersockels zusammengebaut ist und am Isolierdeckel Fenster vorgesehen sind, die mit einer Raststruktur des Isoliersockels verrasten und Berührschutzabdeckung befindet sich oben auf der Mutter befindet und sich eine Schnittstelle an der Unterseite des Isoliersockels befindet, weitere Rastmittel befinden sich an zwei Seiten des Isoliersockels, die Anschlusseinheit ist in den Isoliersockel eingesetzt, und die Bolzenbaugruppe ragt durch ein mittiges Loch der Anschlusseinheit, die Isolierabdeckung ist mit dem Isoliersockel über die Rastmittel und Fenster des Isolierdeckels zusammengefügt, während der Stecker mittels der Muttereinheit und der Bolzenbaugruppe in der Buchse eingeführt, und dort verbunden ist.

## Beschreibung

Die Erfindung betrifft eine drehbare Hochspannungs- und Hochstromverbindungsvorrichtung.

### Technisches Gebiet

Dieses Gebrauchsmuster bezieht sich auf das technische Gebiet der Hochstromanschlussvorrichtungen, insbesondere auf das technische Gebiet einer drehbaren (rotierbaren Hochspannungs- und Hochstromanschlussvorrichtung.

### Technischer Hintergrund

Die Aufgabe der Verbindung in Batteriemodulen, Speichersystemen und Energieboxen ist es, eine sichere, stabile und effektive elektrische Verbindung herzustellen.

Die Verbindung zwischen den Batteriemodulen ist die Verbindung zwischen dem Energiespeichersystem und der Energieverteilerbox, und ihr Zweck ist es, eine effektive, stabile und sichere elektrische Verbindung in einem begrenzten Bauraum bereitzustellen.

In der bisherigen Technologie ist das Stromniveau von Stecker und Buchse, die für die elektrische Verbindung verwendet werden, ausgeschöpft, aber das Spannungsniveau ist niedrig, und der passende Raum von Stecker und Buchse ist stark begrenzt.

Daher sollten Stecker und Buchsen in diesem Betriebszustand die folgenden Anforderungen erfüllen: 1. Zuverlässige Verbindung. Aufgrund des hohen Drehmomentverlusts, d. h. des geringen Restdrehmoments unter komplexen und rauen Arbeitsbedingungen, ist eine sichere Verbindung erforderlich; 2. höhere Nennspannung und höhere elektrische Sicherheit; 3. Bequemere und gute Raumausnutzung und stark erweiterter Anwendungsbereich.

### Technische Beschreibung

Das Gebrauchsmuster bezweckt die Behebung von Nachteilen im Stand der Technik und stellt eine drehbare Hochspannungs-Hochstrom-Verbindungsvorrichtung bereit.

Um die Nachteile der bisherigen bekannten Technik zu überwinden, ist die technische Lösung des Gebrauchsmusters die drehbare Hochspannungs- und Hochstrom-Verbindungsvorrichtung, die eine Buchse und einen Stecker umfasst, wobei die Buchse aus einer Klemmenbaugruppe 1, einer Muttereinheit, einem Isoliersockel 1, einem Isolierdeckel 1 und einer berührungssicheren Abdeckung besteht und der Stecker aus einem Isolierdeckel 2, einer Bolzenbaugruppe, einer Klemmenbaugruppe 2 und einem Isoliersockel 2 besteht.

Die Muttereinheit ist in der konkaven Struktur des Isoliersockels 1 angeordnet, die Klemmenbaugruppe 1 ist im Isoliersockel 1 angeordnet und die Kupferhülse wird auf die Klemmenbaugruppe 1 und die Muttereinheit aufgesetzt, und dann wird die Isolierabdeckung 1 mit dem Isoliersockel 1 zusammengesetzt.

Eine Seitenplatte ist auf einer Seite der Isolierabdeckung 1 angeordnet, und eine Zwischenflächenstruktur ist auf der oberen Ebene der Isolierabdeckung 1 angeordnet, die Seitenplatte ist auf einer Positionierungsplatte auf einer Seite des Isoliersockels 1 abgedeckt, die quadratischen Fenster 1 sind auf der Kante der anderen Seite der Isolierabdeckung 1 angeordnet, die quadratischen Fenster 1 sind angepasst und mit einer Knopfstruktur verbunden, die auf der anderen Seite des Isoliersockels 1 angeordnet ist; ferner ist eine berührungssichere Abdeckung ist auf der Muttereinheit montiert.

Die Schnittstelle 2 befindet sich an der Unterseite des Isoliersockels, die Positionierungsknöpfe befinden sich an zwei Seiten des Isoliersockels, die Klemmenbaugruppe 2 wird in den Isoliersockel eingesetzt, und die Bolzenbaugruppe geht durch das mittlere Loch der Klemmenbaugruppe 2, der Isolierdeckel 2 wird mit dem Isoliersockel 1 über die Positionierungsknöpfe des Isoliersockels und die quadratischen Fenster 2 des Isolierdeckels zusammengesetzt.

Der Stecker wird über die Mutter und den Bolzen in die Buchse gesteckt, und die elektrische und physikalische Verbindung wird hergestellt.

Gemäß einer anderen Ausführungsform des Gebrauchsmusters befindet sich in der Mitte der konkaven Struktur ein Positionierungszylinder, um die Muttereinheit zu positionieren.

Gemäß einer anderen Ausführungsform des Gebrauchsmusters hat die berührungssichere Abdeckung eine ringförmige konvexe Struktur, die mit dem ringförmigen Schlitz der Muttereinheit verbunden ist.

Gemäß einer anderen Ausführungsform des Gebrauchsmusters sorgt die blütenblattartige Struktur in der Buchsenschnittstelle und der Steckerschnittstelle für die angepasste Eigenschaft, dass Stecker und Buchse um z.B. je 30 oder 36 Grad gedreht werden können. Andere Winkel sind natürlich auch realisierbar und das Gebrauchsmuster ist nicht darauf beschränkt

Die drehbare Hochspannungs- und Hochstrom-Verbindungsvorrichtung hat den Vorteil, dass Schrauben und Muttern aus Hochleistungsstahl hergestellt sind und die Kriechstrecke von 9,5 mm/Min bis 12 mm/Max bei dieser Ausgestaltung beträgt. Die Steckverbindung von Stecker und Buchse hat eine blütenblattähnliche Schnittstellenstruktur, und die 30-Grad-Drehverbindung bzw. die realisierten Drehschritte oder die 36-Grad-Drehverbindung bieten einen großen Freiheitsgrad bei der Steckverbindung.

### Figurenbeschreibung

Im Folgenden wird dieses Gebrauchsmuster unter Bezugnahme auf die Zeichnungen 1 bis 5 und die Ausführungsform näher beschrieben.
Figur 1 ist die schematische Strukturdarstellung der Explosionsdarstellung einer Ausführungsform der Buchse des Steckverbinders.
Figur 2 ist eine Schnittdarstellung der Buchse des Steckverbinders des Gebrauchsmusters.
Figur 3 ist das schematische Ansicht der H-Struktur des Teils in Figur 2.
Figur 4 ist die schematische Strukturdarstellung der Explosionsdarstellung des Steckers 2 des Steckverbinders und
Figur 5 ist eine Schnittdarstellung des Steckers.

### Bezugszeichenliste

1-Steckdose (Buchse,
2-Stecker,
3-Anschlusseinheit,
4-Muttereinheit,
5-Isoliersockel,
6-Isolierabdeckung,
7-Berührungsschutzabdeckung,
8-Isolierdeckel,
9-Bolzenbaugruppe / Bolzeneinheit,
10-Anschlusseinheit,
11- Isoliersockel,
12- Konkave Struktur,
13- Raststruktur,
14-Positionierzylinder,
15-Vierkantfenster/ quadratische Fenster,
16-Seitenplatte,
17- Positionierplatte,
18- Kupferhülse,
19- Ringförmige Nut,
20- Ringförmige konvexe Struktur,
21- Schnittstelle 1,
22-Schnittstelle 2,
23-Rastmittel,
24-Vierkantfenster.

### Beschreibung bevorzugter Ausführungsformen

Selbstverständlich sind die beschriebenen Ausführungsformen nur ein exemplarischer Teil der Ausführungsformen des Gebrauchsmusters, nicht abschließend alle Ausführungsformen. Zum Schutzumfang des Gebrauchsmusters gehören die Ausführungsformen des Grundgebrauchsmusters und alle anderen Ausführungsformen, die ein Fachmann ohne schöpferische Tätigkeit aus dem Schutzanspruch erhält.

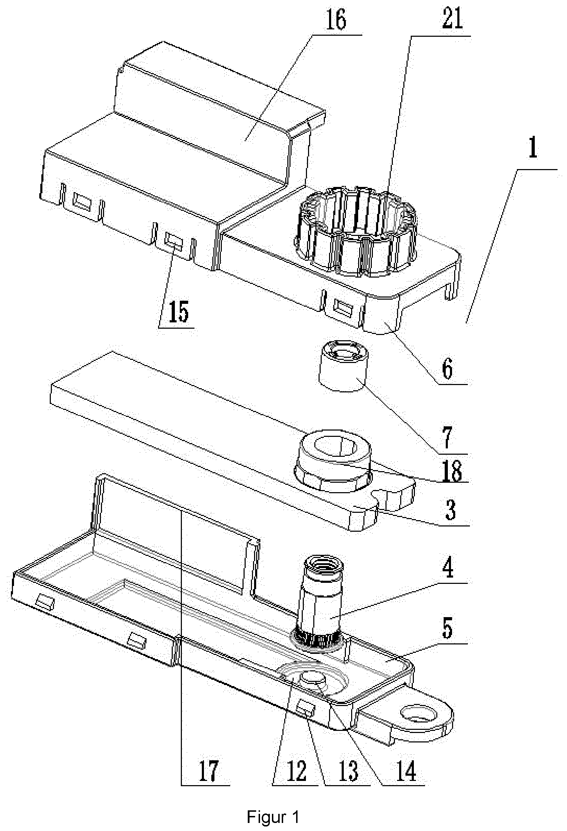

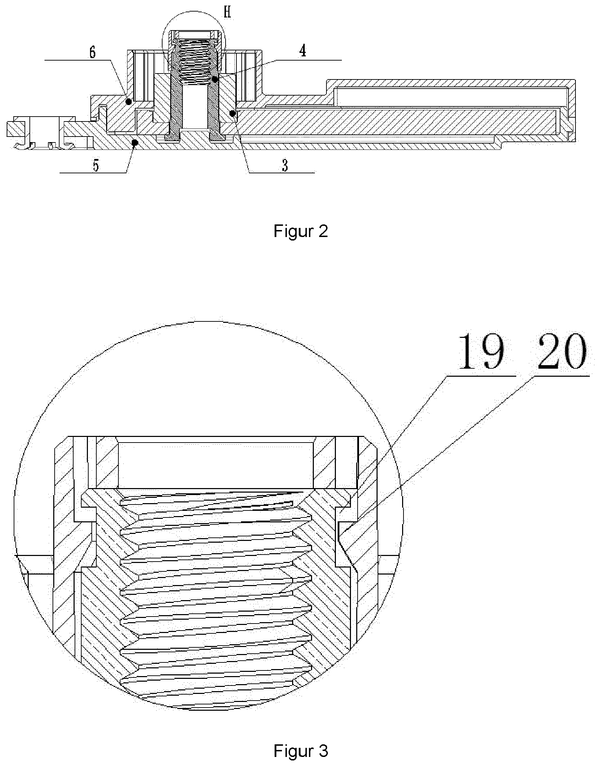

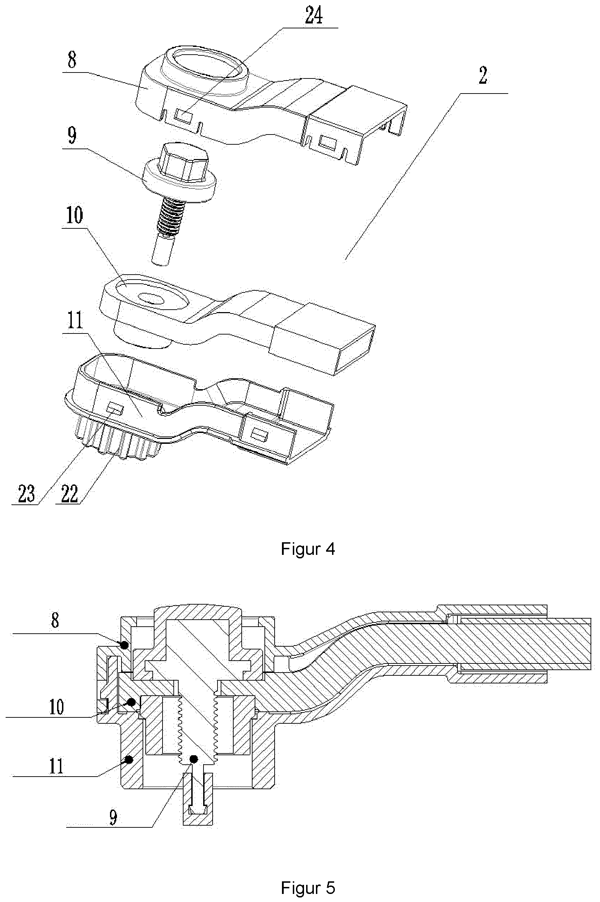

Wie in den Figuren 1-5 gezeigt, besteht die Steckdose / Buchse 1 aus einer Anschlusseinheit 3, einer Muttereinheit / Mutter 4, einem Isoliersockel 5, einer Isolierabdeckung 6 und einer Berührschutzabdeckung 7. Der Stecker 2 besteht aus dem Isolierdeckel 8, der Bolzenbaugruppe 9, der Anschlusseinheit 10 und dem Isoliersockel 11.

Die Muttereinheit 4 ist in der konkaven Struktur 12 des Isoliersockels 5 angeordnet, die Anschlusseinheit 3 ist im Isoliersockel 5 angeordnet, und die Kupferhülse 18 wird auf die Anschlusseinheit 3 und die Muttereinheit 4 aufgesetzt, und dann wird die Isolierabdeckung 6 mit dem Isoliersockel 5 zusammengebaut. Eine Seitenplatte 16 ist an einer Seite der Isolierabdeckung 6 angeordnet, und die Schnittstelle 21 ist auf der oberen Ebene der Isolierabdeckung 6 vorgesehen, die Seitenplatte 16 ist auf einer Positionierungsplatte 17 an einer Seite des Isoliersockels 5 abgedeckt, die quadratischen Fenster 15 sind am Rand der anderen Seite der Isolierabdeckung 6 angeordnet, die quadratischen Fenster 15 sind mit einer Raststruktur 13, die auf der anderen Seite des Isoliersockels 5 angeordnet ist, korrespondierend und verbunden, und eine Berührschutzabdeckung 7 ist auf der Muttereinheit 4 montiert.

Die Schnittstelle 22 befindet sich an der Unterseite des Isoliersockels 11, die Rastmittel 23 befinden sich an zwei Seiten des Isoliersockels 11, die Klemmenbaugruppe wird in den Isoliersockel eingesetzt, und die Bolzeneinheit 9 wird durch das mittlere Loch der Klemmenbaugruppe geführt, die Isolierabdeckung 8 wird über die Rastmittel 23 des Isoliersockels 11 und die quadratischen Fenster 24 der Isolierabdeckung 8 mit dem Isoliersockel 11 verbunden.

Der Stecker 2 wird über die Mutter 4 und die schraubbare Bolzeneinheit 9 in die Buchse 1 gesteckt, wodurch die elektrische und physikalische Verbindung hergestellt wird.

Wenn der Stecker 2 mit der Buchse 1 verbunden ist, wird die Schnittstelle 22 des Steckers 2 mit der Schnittstelle 21 der Buchse 1 zusammengebracht. Die Schnittstelle 21 und die Schnittstelle 22 sind eine blütenblattähnliche, kreisförmige Struktur und der Eingriff muss während des Zusammenbringens sichergestellt werden, so dass die Bolzeneinheit 9 des Steckers 2 in die Mutterbeinheit 4 der Buchse 1 eingeführt wird und die gesamte Verbindung eine 30-Grad-Drehung oder eine 36-Grad-Drehung ausführen kann. Dies bietet eine große Freiheit zur Anpassung.

Das Zusammenstecken von Stecker 2 und Buchse 1 ist bequem, und der Stecker 2 und die Buchse 1 werden durch Positionierung und Klemmung fixiert. Wenn Stecker und Buchse zusammengefügt werden, werden Mutter und Schraube mit einem bestimmten Drehmoment zusammengefügt, um eine große Vorspannkraft zu erzeugen, so dass eine stabile, zuverlässige und effektive Verbindung entsteht, die Raststruktur 13 des Steckers und die Anschlusseinheit 10 der Buchse werden fest zusammengefügt und die hohe Strombelastbarkeit von 200 A bis 600 A kann so erreicht werden.

Um die Montage bequemer und die Positionierung genauer zu machen, ist der Positionierzylinder 14 für die Positionierung der Mutter 4 in der Mitte der konkaven Struktur 12 angeordnet. Während des Montageprozesses muss die Muttereinheit 4 nur auf den Positionierungszylinder 14 gesetzt werden, und dann wird die Raststruktur 13 in die Fenster 15 gesetzt, um die Gesamtpositionierung der Muttereinheit 4 abzuschließen.

Die Innenseite der Berührschutzabdeckung 7 ist mit einer ringförmigen konvexen Struktur 20 versehen, und die ringförmige konvexe Struktur 20 wird in den ringförmigen Schlitz /Nut 19 eingeklemmt, der am oberen Ende der Muttereinheit 4 angeordnet ist. Die Berührschutzabdeckung 7 kann eine sehr gute Schutzfunktion beim Steckvorgang übernehmen.

Die Schnittstelle 21 und die Schnittstelle 22 sind eine blütenblattähnliche kreisförmige Struktur, und die Verbindung der Schnittstelle 21 und der Schnittstelle 22 ist ein 30-Grad-Drehpaar oder ein 36-Grad-Drehpaar. Dadurch wird nicht nur eine stabile, zuverlässige und effektive elektrische Verbindung erreicht, sondern auch eine mehrwinklige, drehbare Anpassung, die die Raumausnutzung erheblich verbessert.

Die erläuterte Darstellung ist nur eine bevorzugte Ausführungsform dieses Gebrauchsmusters.

## Patentansprüche

1. Drehbare Hochspannungs- und Hochstrom-Verbindungsvorrichtung, die einen Stecker (2) und eine Buchse (1) umfasst, wobei die Buchse (1) aus einer Anschlusseinheit (3), einer Muttereinheit (4), einem Isoliersockel (5), einer Isolierabdeckung (6) und einer Berührschutzabdeckung (7) besteht und der Stecker (2) aus einer Anschlusseinheit (10), einer schraubenartigen Bolzeneinheit (9), einem Isoliersockel (11) und einer Isolierabdeckung (8), **dadurch gekennzeichnet, dass** die Muttereinheit (4) in eine konkave Struktur (12) des Isoliersockels (5) und die Anschlusseinheit (3) in den Isoliersockel (5) eingesetzt sind und eine Kupferhülse (18) auf die Anschlusseinheit (3) und die Muttereinheit (4) aufgesetzt ist, und die Isolierdabdeckung (6) mit dem Isoliersockel (5) zusammengebaut ist, wobei der Isolierdeckel (6) eine Seitenplatte (16) aufweist und eine Schnittstelle (21) besitzt, wobei die Seitenplatte (16) mit einer Positionierplatte (17) des Isoliersockels (5) zusammengebaut ist und am Isolierdeckel (6) Fenster (15) vorgesehen sind, die mit einer Raststruktur (13) des Isoliersockels (5) verrasten und Berührschutzabdeckung (7) befindet sich oben auf der Mutter (4) befindet und sich eine Schnittstelle (22) an der Unterseite des Isoliersockels (11) befindet, weitere Rastmittel (23) befinden sich an zwei Seiten des Isoliersockels (11), die Anschlusseinheit (10) ist in den Isoliersockel (11) eingesetzt, und die Bolzenbaugruppe (9) ragt durch ein mittiges Loch der Anschlusseinheit (10), die Isolierabdeckung (8 ) ist mit dem Isoliersockel (11) über die Rastmittel (23) und Fenster (24) des Isolierdeckels (8) zusammengefügt, während der Stecker (2) mittels der Muttereinheit (4) und der Bolzenbaugruppe (9) in der Buchse (1) eingeführt, und dort verbunden ist.

2. Drehbare Hochspannungs- und Hochstrom-Verbindungsvorrichtung gemäß Anspruch 1, wobei ein Positionierzylinder (14) in der Mitte der konkaven Struktur (12) ausgebildet ist, um die Muttereinheit (4) zu positionieren.

3. Drehbare Hochspannungs- und Hochstrom-Verbindungsvorrichtung gemäß Anspruch 1, wobei die Berührschutzabdeckung (7) eine ringförmige konvexe Struktur (20) aufweist und diese ringförmige konvexe Struktur (20) mit einem ringförmigen Schlitz (19) der Mutterbaugruppe (4) zusammengefügt ist.

4. Drehbare Hochspannungs- und Hochstrom-Verbindungsvorrichtung gemäß Anspruch 1, wobei blütenblattartige Struktur in der Schnittstelle (21) der Buchse (1) und der Schnittstelle (22) des Steckers (1) ausgebildet sind, dass Stecker und Buchse um 30 oder 36 Grad oder entsprechenden Schritten zueinander verdreht zusammengesteckt werden können.
